(19) Europäisches Patentamt
European Patent Office
Office européen des brevets

(11) **EP 2 446 528 B1**

## (12) EUROPÄISCHE PATENTSCHRIFT

(45) Veröffentlichungstag und Bekanntmachung des Hinweises auf die Patenterteilung:
**15.01.2014 Patentblatt 2014/03**

(21) Anmeldenummer: **10725475.7**

(22) Anmeldetag: **22.06.2010**

(51) Int Cl.:
***H02P 6/18*** *(2006.01)*

(86) Internationale Anmeldenummer:
**PCT/EP2010/058820**

(87) Internationale Veröffentlichungsnummer:
**WO 2010/149656 (29.12.2010 Gazette 2010/52)**

(54) **VERFAHREN UND EINRICHTUNG ZUR KOMPENSATION VON LASTEINFLÜSSEN BEI PERMANENTERREGTEN MOTOREN**

METHOD AND DEVICE FOR COMPENSATING LOAD INFLUENCES IN PERMANENTLY EXCITED MOTORS

PROCÉDÉ ET DISPOSITIF DE COMPENSATION DES IMPACTS DE CHARGE DES MOTEURS À AIMANTS PERMANENTS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.06.2009 DE 102009030884**

(43) Veröffentlichungstag der Anmeldung:
**02.05.2012 Patentblatt 2012/18**

(73) Patentinhaber: **Gärtner-Electronic-Design GmbH 15236 Frankfurt (Oder) (DE)**

(72) Erfinder:
• **SCHEIT, Alexander**
  **15232 Frankfurt (Oder) (DE)**
• **SEELIG, Horst-Günter**
  **15234 Frankfurt (Oder) (DE)**

(74) Vertreter: **Kailuweit & Uhlemann Patentanwälte Postfach 320 139 01013 Dresden (DE)**

(56) Entgegenhaltungen:
EP-A2- 1 133 050        DE-B4- 4 090 927
JP-A- 2002 165 482      US-A- 5 254 914
US-A1- 2007 085 508     US-A1- 2007 252 587

**Beschreibung**

Die Erfindung betrifft Einrichtungen zur Kompensation von Lasteinflüssen bei bürstenlosen Gleichstrommotoren (BLDC) mit einem Stator und einem Rotor mit Magneten, wobei die einzelnen Phasen des Stators im Stern oder Dreieck verschaltet sind und die Rotorlage aus den Induktivitäten der Phasen oder deren Relationen ermittelt wird.

Permanent erregte Synchronmaschinen (PMSM) und bürstenlose Gleichstrommotoren (BLDC) bestehen aus einem Stator und einem Rotor mit Magneten. Die einzelnen Phasen des Stators sind im Stern oder Dreieck verschaltet. Der Motor wird mit einem Stromrichter betrieben. Diese Motoren benötigen eine Ansteuerelektronik, die die Rotorlage ermittelt und die einzelnen Phasen bestromt.

Die Rotorlage kann mithilfe von Sensoren detektiert werden. So werden unter anderem Hallsensoren verwendet. Sensoren benötigen Bauraum und bedingen höhere Systemkosten.

Um diese Nachteile zu vermeiden, werden sensorlose Ansteuerverfahren verwendet. Diese können in zwei Gruppen grob klassifiziert werden.

Eine Gruppe verwendet die durch Bewegung in den Phasen induzierte Spannung. Der systembedingte Nachteil liegt in der fehlenden Lageinformation bei Stillstand.

Die zweite Gruppe basiert auf der Variation der Ständerinduktivitäten. Die Sättigung der Ständerinduktivität wird durch das Rotorfeld der Permanentmagnete und das stromverursachte Statorfeld beeinflusst.

Die Induktivität einer Spule ist im stromlosen Zustand proportional zur relativen Permeabilität. Aufgrund der im Eisen auftretenden Sättigungseffekte sinkt mit steigender Feldstärke die relative Permeabilität oder anders ausgedrückt, es erhöht sich der magnetische Widerstand. Dabei ist nur der Betrag und nicht die Richtung entscheidend. Daraus folgt eine rotorlageabhängige Funktion der Induktivität für einen BLDC-Motor. Besitzt der Motor drei Phasen, so sind die Funktionen 60 elektrische Grad zueinander verschoben. Im unbestromten Zustand besitzen die Nord- und die Südpole der Rotormagneten die gleiche Wirkung. Deshalb besitzen diese Funktionen der Induktivitäten die doppelte Periodizität zur elektrischen Periode. Diese Zweideutigkeit muss für eine vollständige Lageinformation aufgelöst werden. Es wird dem Statorfeld ein stromerregtes Feld überlagert.

So wird die Sättigung im Motor entweder verstärkt oder verringert und so die entsprechende Induktivität verkleinert oder vergrößert. Dieser Effekt beeinflusst ebenso die Winkelbestimmung bei Nutzbestromung des Motors und führt zu einer fehlerhaft bestimmten Rotorlage.

Die Druckschrift DE 40 90 927 B4 beinhaltet einen Motor, insbesondere einen kollektorlosen Gleichstrommotor. Dabei wird ein Verfahren zur Kompensation von Lasteinflüssen bei permanenterregten Motoren realisiert, wobei die Rotorlage aus den Induktivitäten der Phasen oder deren Relationen ermittelt wird.

Die Bestromungszeit kann dabei gemäß einer tabulierten Abhängigkeit reduziert werden. Die erforderlichen Bestromungszeiten werden nicht mehr aufgrund eines mathematischen Ausdrucks berechnet, sondern sind in tabellenartiger Form beispielsweise in einem Speicherbaustein hinterlegt. Mit fortschreitendem Rotorwinkel oder mit fortschreitender Zeit wird jeweils eine neue Information der Bestromungsdauer ausgelesen. Das erfolgt, bis eine minimale Bestromungszeit erreicht ist, die konstant gehalten wird. Die dazu notwendigen Korrektuwerte werden aus den gemessenen Stromwerten bestimmt und in Relation zu oberen und unteren Grenzwerten gesetzt. Im Falle dass kein Fehlereinfluss vorliegt, kann der Betrag auch noch zur Korrektur bei der Bestimmung der Position des Rotors herangezogen werden. Dazu wird eine zusätzliche Korrekturfunktion oder Korrekturtabelle benötigt. Diese sind durch ein Experiment festzulegen, welches vorab durchzuführen ist.

Durch die Druckschrift US 2007/0085508 A1 ist ein Verfahren zum Schätzen einer Position eines Rotors eines Synchronmotors und eine Vorrichtung zum Steuern des Motors auf Basis der geschätzten Position bekannt. Die Schätzung der Position basiert auf der ausgebildeten Spannung, dem generierten Strom und einem motorspezifischen Kennwert.

Der im Patentanspruch 1 angegebenen Erfindung liegt die Aufgabe zugrunde, induktivitätsbasierte Signale zur Lagebestimmung des Rotors bei bürstenlosen Gleichstrommotoren (BLDC) gegen Lasteinflüsse zu stabilisieren.

Diese Aufgabe wird mit den im Patentanspruch 1 aufgeführten Merkmalen gelöst.

Die Einrichtungen zur Kompensation von Lasteinflüssen bei bürstenlosen Gleichstrommotoren (BLDC) mit einem Stator und einem Rotor mit Magneten, wobei die einzelnen Phasen des Stators im Stern oder Dreieck verschaltet sind und die Rotorlage aus den Induktivitäten der Phasen oder deren Relationen ermittelt wird, zeichnen sich durch eine Stabilisierung der induktivitätsbasierten Signale zur Lagebestimmung des Rotors gegen Lasteinflüsse aus. Dabei werden vorteilhafterweise stromabhängige Fehler der während des Motorbetriebs ermittelten Winkelwerte korrigiert.

Dazu weist die Einrichtung zur Kompensation von Lasteinflüssen bei bürstenlosen Gleichstrommotoren (BLDC)

- eine ein notwendiges Pulsweitenmodulations-Muster bereitstellende Steuereinrichtung für einen vorbestimmten Betrieb des Gleichstrommotors,
- einen der Steuereinrichtung nachgeschalteten Stromrichter für den Gleichstrommotor,
- eine mit dem Gleichstrommotor zusammengeschaltete Einrichtung zur Ermittlung der die fehlerbehaftete Lage des Rotors repräsentierenden Induktivitäten, wobei entweder das induktivitätsbasierte Signal $\Phi$ aus den gemessenen Induktivitäten bestimmt wird oder die induktivitätsbasierten Signale $L_U$, $L_V$ und $L_W$ generiert werden,

- eine Messeinrichtung für entweder die Phasenströme oder für den Zwischenkreisstrom und
- eine unter Einbeziehung wenigstens eines motorspezifischen Kennwertes mindestens einen stromabhängigen Korrekturwert ermittelnde und diesen Korrekturwert mit den aus der induktivitätsbasierten Lagebestimmung resultierenden induktivitätsbasierten Signale verknüpfende Korrektureinrichtung

auf.

Dabei wird der motorspezifische Kennwert aus den Einflüssen auf die Induktivitäten des Gleichstrommotors motorspezifisch als Funktion für den Zusammenhang zwischen dem Winkelwert und entweder den Phasenströmen oder dem Zwischenkreisstrom für die Korrektureinrichtung

- experimentell ohne Kenntnis der Konstruktion des Gleichstrommotors,
- analytisch/simulatorisch durch Analyse der Motorkonstruktion oder
- automatisch beim Motorstart ermittelt.

Damit wird die unter Verwendung der aus den gemessenen und die fehlerbehaftete Lage des Rotors repräsentierenden Induktivitäten des Gleichstrommotors ermittelte und korrigierte Rotorlage $\Phi_{korr}$ bestimmt, so dass über die Steuereinrichtung mit dem Korrekturwert beaufschlagte und damit korrigierte Schaltzustände an dem Stromrichter (2) zur Ansteuerung des Gleichstrommotors (3) anliegen.

Die Einrichtung kompensiert die Lasteinflüsse bei permanenterregten Motoren. Dies führt zu einer Stabilisierung der verwendeten induktivitätsbasierten Signale. Das System wird so robuster gegen Lasteinflüsse.

Der Effekt der Verminderung der Signalstärke kann reduziert werden. Ein möglicher fehlerhafter Sprung der Rotorlageerkennung um 180 elektrische Grad, wird sicher verhindert.

Eine experimentelle Bestimmung des motorspezifischen Kennwertes erfolgt vorteilhafterweise auf Prüfständen mit mehreren Messungen.

Die Analyse der Motorkonstruktion auf Basis der finiten Elemente Methode (FEM) ermöglicht ebenso die Bestimmung der Korrekturgrößen. Die daraus entwickelten Prozessmodelle bestehen aus komplexeren Funktionen höherer Ordnung. Aufgrund des größeren mathematischen Freiheitsgrades können diese Korrekturfunktionen effizienter auf den Zielmotor angepasst werden.

Eine automatische Ermittlung bietet den Vorteil, dass diese im Betrieb erfolgt, so dass demzufolge Exemplarunterschiede berücksichtigbar sind. Weiterhin ist diese selbstabgleichend und ermöglicht so technische Lösungen, die unabhängig vom Motor erstellt werden können. Das Produkt kann so in verschiedenen Applikationen eingesetzt werden. Dies führt zu einer Systemkostenreduktion.

Die Korrektur der fehlerbehafteten induktivitätsbasierten Signale ermöglicht eine genauere Rotorlageerkennung. Der Motor wird effizienter angesteuert.

Vorteilhafte Ausgestaltungen der Erfindung sind in den Patentansprüchen 2 bis 6 angegeben.

Die Korrektureinrichtung ist nach der Weiterbildung des Patentanspruchs 2 weiterhin mit einer Einrichtung zur Ermittlung der Korrekturfunktion zusammengeschaltet, wobei die Einrichtung die Motorspannung und damit den Motorstrom automatisch modifiziert, und dass die Einrichtung mit der Korrektureinrichtung verbunden ist, so dass aus dem induktivitätsbasierten Lagesignal und den Motorströmen die Korrekturfunktion bestimmbar ist.

Die Steuereinrichtung ist nach der Weiterbildung des Patentanspruchs 3 über die Messeinrichtung und die Korrektureinrichtung mit der Einrichtung zur Ermittlung einer  Korrekturfunktion zur automatischen Ermittlung des motorspezifischen Kennwertes beim Motorstart verbunden, wobei

- der Gleichstrommotor bestromt,
- die induktivitätsbasierten Signale bei mindestens zwei verschiedenen Motorströmen gemessen,
- die sich daraus ergebenden Winkelwerte aus den Induktivitäten bestimmt und
- die stromabhängige Korrekturfunktion in der Einrichtung zur Ermittlung der Korrekturfunktion ermittelt wird, so dass ein mindestens linearer Korrekturwert vorhanden ist.

Damit ist ein mindestens linearer Korrekturwert vorhanden.

Die Steuereinrichtung ist nach der Weiterbildung des Patentanspruchs 4 über die Messeinrichtung und die Korrektureinrichtung mit der Einrichtung zur Ermittlung einer Korrekturfunktion zur automatischen Ermittlung des motorspezifischen Kennwertes beim Motorstart verbunden, wobei die Induktivitäten bei verschiedenen Strömen und vernachlässigbarer Bewegung des Gleichstrommotors gemessen werden und der Zusammenhang zwischen dem berechneten Winkelwert und den Strömen berechnet wird, so dass der Korrekturwert im einfachsten Fall eine Konstante ist.

Die Korrektureinrichtung für die strom- und rotorlageabhängigen Korrekturwerte auf der Basis mindestens eines motorspezifischen Kennwertes ist nach der Weiterbildung des Patentanspruchs 5 mit einer Erkennungseinrichtung als einer Regelschleife zusammengeschaltet, so dass aus den damit korrigierten Signalen $L_{U\,korr}$, $L_{V\,korr}$ und $L_{W\,korr}$ die um die Lasteinflüsse korrigierte Rotorlage $\Phi_{korr}$ ermittelt wird.

Dies ermöglicht eine präzisere Korrektur der Winkelwerte, da mit dieser Anordnung Besonderheiten der Winkelfunktionen nach denen sich die Induktivitäten verhalten, erfasst werden können.

Die Korrektureinrichtung ist nach der Weiterbildung des Patentanspruchs 6 weiterhin mit einer Einrichtung zur Ermittlung der Korrekturfunktionen zusammengeschaltet, wobei die Motorspannung und damit der Motorstrom modifiziert werden. Die Einrichtung ist darüber hinaus mit der Korrektureinrichtung verbunden, so dass aus den induktivitätsbasierten Lagesignalen und den Motorströmen die Korrekturfunktionen bestimmbar sind.

Ausführungsbeispiele der Erfindung sind in den Zeichnungen jeweils prinzipiell dargestellt und werden im Folgenden näher beschrieben.

Es zeigen:

Fig. 1 eine Einrichtung zur Kompensation von Lasteinflüssen auf die Rotorlageerkennung bei permanenterregten Motoren und

Fig. 2 eine Einrichtung zur Kompensation von Lasteinflüssen auf die induktivitätsbasierten Signale einer Rotorlagebestimmung bei permanenterregten Motoren.

In den Ausführungsbeispielen werden jeweils ein Verfahren und eine Einrichtung zusammen näher erläutert.

Betrachtet man zunächst den stromlosen Zustand eines BLDC-Motors. Die Induktivität einer Spule ist proportional zur relativen Permeabilität. Aufgrund der im Eisen auftretenden Sättigungseffekte sinkt mit steigender Feldstärke die relative Permeabilität oder anders ausgedrückt, es erhöht sich der magnetische Widerstand. Dabei ist nur der Betrag und nicht die Richtung entscheidend. Überträgt man dieses Wissen auf einen BLDC-Motor ergibt sich eine rotorlageabhängige Funktion der Induktivität. Besitzt der Motor drei Phasen, so sind die Funktionen 120 elektrische Grad zueinander verschoben. Sie besitzen zur elektrischen Umdrehung die doppelte Periodizität. Ein Minimum tritt auf, wenn ein Nord- oder Südpol dem Polschuh der Phase gegenübersteht.

Bei der zweiten charakteristischen Position ist der Betrag der Feldstärke in den Phasen U und W gleich, aber die Richtungen der Felder unterschiedlich. Die Induktivitäten sind im stromlosen Zustand gleichgroß. Der radiale Fluss in der Phase V ist gleich Null. Die Induktivität V ist die Größte. In dieser Betrachtung wird die Variation des Luftspalts vernachlässigt.

Wird der Motor bestromt, überlagern sich die Felder des Rotors und des Stators.

Ein System, welches auf Basis dieser veränderten Induktivitäten eine Rotorlage ermittelt, würde falsch kommutieren. Dieser Fehler muss kompensiert werden. Ohne eine Kompensation dieses Winkelfehlers kann dieser Effekt zu einem schwerwiegenden Problem führen. Die Variation der Induktivitäten kann unterdrückt werden. Das System ist nicht mehr in der Lage, die Rotorposition richtig zu bestimmen. Es wird immer weiter abdriften. Das Statorfeld reduziert das Gesamtfeld in der Spule und die Variation der Induktivitäten verkleinert sich, bis keine Variation mehr zu detektieren ist. Zudem wird der Motor nicht im optimalen Arbeitspunkt betrieben.

## 1. Ausführungsbeispiel

In einem ersten Verfahren zur Kompensation von Lasteinflüssen bei permanenterregten Motoren 3, wobei die Rotorlage aus den Induktivitäten der Phasen ermittelt wird, werden mittels einer ersten Einrichtung die Lasteinflüsse bei der Bestimmung der Rotorlage kompensiert.

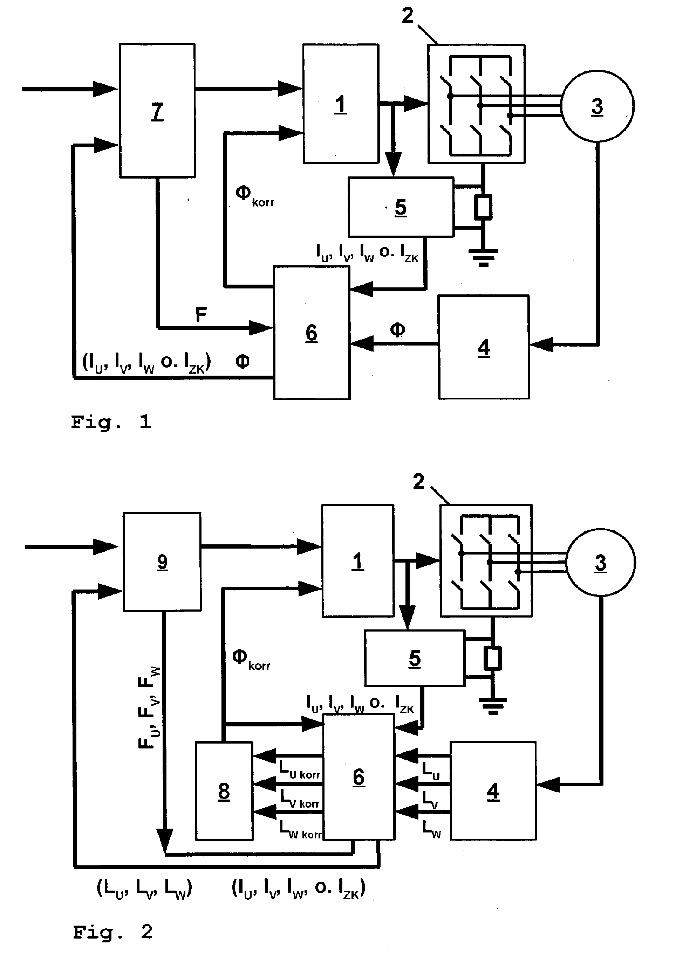

Die Fig. 1 zeigt eine Einrichtung zur Kompensation von Lasteinflüssen bei permanenterregten Motoren in einer prinzipiellen Darstellung.

Die Einrichtung besteht im Wesentlichen aus einer Steuereinrichtung 1, einem Stromrichter 2 für den permanenterregten Motor 3, einer Einrichtung 4 zur Ermittlung der Induktivitäten, einer Messeinrichtung 5 und einer Korrektureinrichtung 6.

Sowohl die Messeinrichtung 5 als auch die Einrichtung 4 zur Ermittlung der Induktivitäten ist dabei mit der Korrektureinrichtung 6 der induktivitätsbasierten Lagebestimmung zusammengeschaltet.

Die Messeinrichtung 5 ermittelt den Zwischenkreis- oder die Phasenströme. Vorzugsweise verwendet man dazu einen Messwiderstand. Auf Basis dieser Ströme und wenigstens eines motorspezifischen Kennwertes ermittelt die Korrektureinrichtung 6 mindestens einen Korrekturwert, der mit den aus der induktivitätsbasierten Lagebestimmung resultierenden induktivitätsbasierten Signalen verknüpft wird.

Im einfachsten Fall wird der Strom $I_{ZK}$ mit einer Konstanten K multipliziert- und von der detektierten Rotorlage subtrahiert.

$\Phi_{korr} = \Phi$ - F, wobei F = $I_{ZK}$ * K ist.

Die Konstante K ist motorspezifisch ermittelbar. Experimentell werden über mehrere Messungen die Reaktionen der Induktivitäten auf Lasteinflüsse bei verschiedenen Bedingungen untersucht. Eine weitere Möglichkeit bietet die Analyse bzw. Simulation der Motorkonstruktion. Es können komplexere Korrekturfunktionen höherer Ordnung ermittelt werden.

Der motorspezifische Korrekturwert kann auch automatisch beim Motorstart bestimmt werden. Die Einrichtung 7 steuert den Prozess und ermittelt den Korrekturwert. Der Motor 3 wird bestromt, die Induktivitäten gemessen und der Winkel berechnet. Die Zeitspanne, in der die Anordnung die notwendigen Werte misst, ist kleiner als die mechanische Zeitkonstante des Systems. Die sonst mögliche Bewegung des Motors würde die Messung verfälschen.

Die Korrektureinrichtung 6 ist eine unter Einbeziehung wenigstens eines motorspezifischen Kennwertes daraus mindestens einen Korrekturwert ermittelnde Korrektureinrichtung 6, wobei der Korrekturwert mit den aus der induktivitätsbasierten Lagebestimmung resultierenden induktivitätsbasierten Signalen verknüpft wird. Die Korrektureinrichtung 6 ist weiterhin mit der Steuereinrichtung 1 verbunden, wobei mit dem Korrekturwert beaufschlagte und damit korrigierte Schaltzustände an dem Stromrichter 2 für den Motor 3 anliegen.

## 2. Ausführungsbeispiel

In einem zweiten Verfahren zur Kompensation von Lasteinflüssen bei permanenterregten Motoren 3, wobei die Rotorlage aus den Induktivitäten der Phasen ermittelt wird, werden mittels einer zweiten Einrichtung die Lasteinflüsse bei der Bestimmung der Rotorlage kompensiert. Um den strombasierten systematischen Fehler zu kompensieren, ist der Eingriff in das sensorlose Verfahren notwendig. Es werden die induktivitätsbasierten Signale mit Korrekturwerten $L_{U\,korr}$, $L_{V\,korr}$ und $L_{W\,korr}$ beaufschlagt. Die so erhaltenen Signale werden anschließend an das sensorlose Verfahren übergeben.

Fig. 2 zeigt eine derartige Einrichtung zur Kompensation von Lasteinflüssen auf die induktivitätsbasierten Signale einer Rotorlagebestimmung bei permanenterregten Motoren 3 in einer prinzipiellen Darstellung.

Die Steuereinrichtung 1 erhält durch ein äußeres System eine Vorgabe für den Motorbetrieb. Sie berechnet dazu die notwendigen PWM-Muster für den Stromrichter 2. Diese bestromt den Motor 3. Die Messanordnung 4 generiert die induktivitätsbasierten Signale $L_U$, $L_V$ und $L_W$, die einen Fehleranteil besitzen.

Die Korrektur erfolgt, indem von den Signalen die strom- und rotorlageabhängigen Korrekturwerte $K_U$, $K_V$ und $K_W$ subtrahiert werden. Dazu wird die elektrische Periode des Motors in sechs Segmente unterteilt. Diesen Segmenten werden verschiedene Werte für $K_U$, $K_V$ und $K_W$ zugeteilt. Die Werte werden in einer Tabelle gespeichert.

$$L_{U\,korr} = L_U - F_U, \text{ wobei } F_U = I_{ZK} * K_U \text{ ist.}$$

$$L_{V\,korr} = L_V - F_V, \text{ wobei } F_V = I_{ZK} * K_V \text{ ist.}$$

$$L_{W\,korr} = L_W - F_W, \text{ wobei } F_W = I_{ZK} * K_W \text{ ist.}$$

Anschließend werden die so aufbereiteten Signale $L_{U\,korr}$, $L_{V\,korr}$ und $L_{W\,korr}$ der Einrichtung 7 zur Rotorlageerkennung übergeben. In dieser werden die um die Lasteinflüsse korrigierte Rotorlage ermittelt. Die Steuereinrichtung 1 kann auf Basis dieser Information den Motor 3 damit robust betreiben.

Die Konstanten $K_U$, $K_V$ und $K_W$ sind motorspezifisch und müssen ermittelt werden. Dies kann durch Analyse der Motorkonstruktion oder durch Messungen erfolgen.

Diese Werte sind auch automatisch beim Motorstart berechenbar. Dazu wird der Motor 3 bestromt und die Änderung der Induktivitäten bei verschiedenen Motorströmen gemessen.

Die Zeitspanne, in der die Anordnung die notwendigen Werte bestimmt, ist kleiner als die mechanische Zeitkonstante, so dass eine mögliche Bewegung des Rotors vermieden wird.

Die Einrichtung 5 zur Korrektur stellt sicher, dass die Signale eine Mindestamplitude nicht unterschreiten. Dazu werden die Nutzbestromung in Richtung Spätkommutierung verdreht und/oder der Strom begrenzt.

Dazu besteht eine Einrichtung zur Kompensation von Lasteinflüssen bei permanenterregten Motoren 3, wobei die Rotorlage aus den Induktivitäten der Phasen ermittelt wird, im Wesentlichen aus einer Steuereinrichtung 1, einem Stromrichter 2 für den Motor 3, einer Einrichtung 4 zur Ermittlung der Induktivitäten, einer Messeinrichtung 5, einer Korrektureinrichtung 6 und einer Einrichtung 8 zur Bestimmung der Rotorlage.

Sowohl die Messeinrichtung 5 für die Phasenströme oder einen Zwischenkreisstrom als auch die Einrichtung 4 zur Ermittlung der Induktivitäten ist mit der Korrektureinrichtung 6 der induktivitätsbasierten Lagebestimmung zusammengeschaltet.

Die Korrektureinrichtung 6 ist eine die aus der Lage des Rotors generierten induktivitätsbasierten Signale $L_U$, $L_V$ und $L_W$ strom- und rotorlageabhängige Korrekturwerte subtrahierende Korrektureinrichtung 6. Weiterhin ist die Korrektureinrichtung 6 über eine Einrichtung 8 zur Bestimmung der Rotorlage mit der Steuereinrichtung 1 verbunden, wobei aus den korrigierten Signalen $L_{U\,korr}$, $L_{V\,korr}$ und $L_{W\,korr}$ die Rotorlage erkannt und die um die Lasteinflüsse korrigierte Rotorlage $\Phi_{korr}$ ermittelt sowie der Stromrichter 2 und damit der Motor 3 gesteuert wird. Die Einrichtung 8 zur Bestimmung der Rotorlage ist auch mit der Korrektureinrichtung 6 zusammengeschaltet, so dass die jeweils korrigierten Signale $L_{U\,korr}$, $L_{V\,korr}$ und $L_{W\,korr}$ unter Einbeziehung der jeweils korrigierten Rotorlage $\Phi_{korr}$ ermittelt werden. Damit wird der Betrieb des Motors 3 an die jeweilig aktuelle Betriebsbedingung angepasst. Die korrigierten Signale werden sowohl aus den induktivitätsbasierten Signalen $L_U$, $L_V$ und $L_W$ als auch aus den Konstanten in Abhängigkeit der Phasenströme und der korrigierten Rotorlage $\Phi_{korr}$ ermittelt.

## Patentansprüche

1. Einrichtung zur Kompensation von Lasteinflüssen bei bürstenlosen Gleichstrommotoren (BLDC) (3) mit einem Stator und einem Rotor mit Magneten, wobei die einzelnen Phasen des Stators im Stern oder Dreieck verschaltet sind und die Rotorlage aus den Induktivitäten der Phasen oder deren Relationen ermittelt wird, mit

   a) einer ein notwendiges Pulsweitenmodulations-Muster bereitstellende Steuereinrichtung (1) für einen vorbestimmten Betrieb des Gleichstrommotors (3),
   b) einem der Steuereinrichtung nachgeschalteten Stromrichter (2) für den Gleichstrommotor (3),
   c) einer mit dem Gleichstrommotor (3) zusammengeschalteten Einrichtung (4) zur Ermittlung der die fehlerbehaftete Lage des Rotors repräsentierenden Induktivitäten, wobei die induktivitätsbasierten Signale $L_U$, $L_V$ und $L_W$ generiert werden,
   d) einer Messeinrichtung (5) für entweder die Phasenströme oder für den Zwischenkreisstrom,
   e) einer unter Einbeziehung motorspezifischer Kennwerte stromabhängige Korrekturwerte $K_U$, $K_V$ und $K_W$ ermittelnden und diese Korrekturwerte mit den auf der induktivitätsbasierten Lagebestimmung resultierenden induktivitätsbasierten Signalen verknüpfenden Korrektureinrichtung (6),

   wobei die motorspezifischen Kennwerte aus den Einflüssen auf die Induktivitäten des Gleichstrommotors (3) motorspezifisch als Funktion für den Zusammenhang zwischen dem Winkelwert und entweder den Phasenströmen oder dem Zwischenkreisstrom für die Korrektureinrichtung (6)

   - experimentell ohne Kenntnis der Konstruktion des Gleichstrommotors (3),
   - analytisch/simulatorisch durch Analyse der Motorkonstruktion oder
   - automatisch beim Motorstart und

   wobei korrigierte induktivitätsbasierte Signale

   $$L_{U\,korr} = L_U - F_U \text{ mit } F_U = I_{ZK} * K_U,$$

   $$L_{V\,korr} = L_V - F_V \text{ mit } F_V = I_{ZK} * K_V$$

   und

   $$L_{W\,korr} = L_W - F_W \text{ mit } F_W = I_{ZK} * K_W$$

   nach Unterteilung der elektrischen Periode des Gleichstrommotors (3) in sechs Segmente und Zuteilung verschiedener Werte für $K_U$, $K_V$ und $K_W$ und tabellarischer Speicherung ermittelt werden, so dass die unter Verwendung der aus den gemessenen und die fehlerbehaftete Lage des Rotors repräsentierenden Induktivitäten des Gleichstrommotors (3) ermittelte und korrigierte Rotorlage $\Phi_{korr}$ bestimmt wird und über die Steuereinrichtung (1) mit dem Korrekturwert beaufschlagte und damit korrigierte Schaltzustände an dem Stromrichter (2) zur Ansteuerung des Gleichstrommotors (3) anliegen.

2. Einrichtung nach Patentanspruch 1, **dadurch gekennzeichnet, dass** die Korrektureinrichtung (6) weiterhin mit einer Einrichtung (7) zur Ermittlung der Korrekturfunktion zusammengeschaltet ist, wobei die Einrichtung (7) die Motorspannung und damit den Motorstrom automatisch modifiziert, und dass die Einrichtung (7) mit der Korrektureinrichtung (6) verbunden ist, so dass aus dem induktivitätsbasierten Lagesignal und den Motorströmen die Korrekturfunktion bestimmbar ist.

3. Einrichtung nach Patentanspruch 2, **dadurch gekennzeichnet, dass** die Steuereinrichtung (1) über die Messeinrichtung (5) und die Korrektureinrichtung (6) mit der Einrichtung (7) zur Ermittlung einer Korrekturfunktion zur automatischen Ermittlung des motorspezifischen Kennwertes beim Motorstart verbunden ist, wobei

- -der Gleichstrommotor (3) bestromt,
- -die induktivitätsbasierten Signale bei mindestens zwei verschiedenen Motorströmen gemessen,
- -die sich daraus ergebenden Winkelwerte aus den Induktivitäten bestimmt und
- -die stromabhängige Korrekturfunktion in der Einrichtung (7) zur Ermittlung der Korrekturfunktion ermittelt wird, so dass ein mindestens linearer Korrekturwert vorhanden ist.

4. Einrichtung nach Patentanspruch 2, **dadurch gekennzeichnet, dass** die Steuereinrichtung (1) über die Messeinrichtung (5) und die Korrektureinrichtung (6) mit der Einrichtung (7) zur Ermittlung einer Korrekturfunktion zur automatischen Ermittlung des motorspezifischen Kennwertes beim Motorstart verbunden ist, wobei die Induktivitäten bei verschiedenen Strömen und vernachlässigbarer Bewegung des Gleichstrommotors (3) gemessen werden und der Zusammenhang zwischen dem berechneten Winkelwert und den Strömen berechnet wird, so dass der Korrekturwert im einfachsten Fall eine Konstante ist.

5. Einrichtung nach Patentanspruch 1, **dadurch gekennzeichnet, dass** die Korrektureinrichtung (6) für die strom- und rotorlageabhängigen Korrekturwerte auf der Basis mindestens eines motorspezifischen Kennwertes mit einer Erkennungseinrichtung (8) als einer Regelschleife zusammengeschaltet ist, so dass aus den damit korrigierten Signalen $L_{U\,korr}$, $L_{V\,korr}$ und $L_{W\,korr}$ die um die Lasteinflüsse korrigierte Rotorlage $\Phi_{korr}$ ermittelt wird.

6. Einrichtung nach Patentanspruch 5, **dadurch gekennzeichnet, dass** die Korrektureinrichtung (6) weiterhin mit einer Einrichtung (9) zur Ermittlung der Korrekturfunktionen zusammengeschaltet ist, wobei die Motorspannung und damit der Motorstrom modifiziert wird, und dass die Einrichtung (9) mit der Korrektureinrichtung (6) verbunden ist, so dass aus den induktivitätsbasierten Lagesignalen und den Motorströmen die Korrekturfunktionen bestimmbar sind.

**Claims**

1. Device for compensating load influences in brushless d. c. motors (BLDC) (3) having a stator and a rotor with magnets, wherein the single phases of the stator are star-connected or delta-connected and the rotor position is determined from the inductances of the phases or the relations thereof, including

    a) a controller (1) providing a necessary pulse width modulation pattern for a predefined operation of the d. c. motor (3);
    b) a current converter (2), arranged following the controller, for the d. c. motor (3);
    c) a device (4), which is interconnected with the d. c. motor (3), for determining the inductances representing the imperfect position of the rotor, wherein the inductance-based signals $L_U$, $L_V$ and $L_W$ are generated;
    d) a measuring device (5) either for the phase currents or for the intermediate circuit current;
    e) a compensating device (6) which, including motor-specific parameters, determines current-dependent correction values $K_U$, $K_V$ and $K_W$ and couples said correction values with the inductance-based signals that result from the inductance-based position determination,

wherein the motor-specific parameters are motor-specifically determined from the influences on the inductances of the d. c. motor (3) as function of the connection between the angle value and either the phase currents or the intermediate circuit current for the compensating device (6)

- experimentally without knowledge of the design of the d. c. motor (3);
- analytically/by simulation by analyzing the motor design, or
- automatically during the start of the motor,

and wherein corrected inductance-based signals

$$L_{U\ korr} = L_U - F_U \text{ with } F_U = I_{ZK} * K_U,$$

$$L_{V\ korr} = L_V - F_V \text{ with } F_V = I_{ZK} * K_V,$$

and

$$L_{W\ korr} = L_W - F_W \text{ with } F_W = I_{ZK} * K_W$$

are determined after subdividing the electrical period of the d. c. motor (3) into six segments and assigning different values of $K_U$, $K_V$ and $K_W$ and table storing so that the rotor position $\Phi_{korr}$, which is determined using the measured inductances of the d. c. motor (3), that represent the imperfect position of the rotor, and corrected, and switching states, applied with the correction value via the controller (1), thus corrected, are present at the current converter (2) for controlling the d. c. motor (3).

2. Device to claim 1 **characterized by** that further, the compensating device (6) is interconnected with a device (7) for determining the correction function, wherein the device (7) automatically modifies the motor voltage, therefore the motor current, and the device (7) is connected to the compensating device (6) so that the correction function is determinable from the inductance-based position signal and the motor currents.

3. Device to claim 2 **characterized by** that the controller (1) is connected via the measuring device (5) and the compensating device (6) to the device (7) for determining a correction function for the automatic determination of the motor-specific parameter at the start of the motor, wherein

   - the d. c. motor (3) is current-loaded;
   - the inductance-based signals are measured at at least two different motor currents;
   - the angle values resulting therefrom are determined from the inductances; and
   - the current-dependent correction function is determined in the device (7) for determining the correction function so that an at least linear correction value is existing.

4. Device to claim 2 **characterized by** that the controller (1) is connected via the measuring device (5) and the compensating device (6) to the device (7) for determining a correction function for the automatic determination of the motor-specific parameter at the start of the motor, wherein the inductances are measured at different currents and negligible motion of the d. c. motor (3) and the connection between the calculated angle value and the currents is calculated so that the correction value is a constant in the simplest case.

5. Device to claim 1 **characterized by** that the compensating device (6) for the current- and rotor position-dependent correction values is interconnected based on at least one motor-specific parameter with a detecting device (8) as a regulating loop so that the rotor position $\Phi_{korr}$ corrected for the load influences is determined from the signals $L_{U\ korr}$, $L_{V\ korr}$ and $L_{W\ korr}$ corrected therewith.

6. Device to claim 5 **characterized by** that further, the compensating device (6) is interconnected with a device (9) for determining the correction functions, wherein the motor voltage and therefore the motor current is modified, and the device (9) is connected to the compensating device (6) so that the correction functions are determinable from the inductance-based position signals and the motor currents.

**Revendications**

1. Dispositif de compensation des impacts de charge sur les moteurs à courant continu sans balais (BLDC) (3) pourvus d'un stator et d'un rotor avec des aimants, les différentes phases du stator étant câblées en étoile ou en triangle et la position du rotor étant déterminé à partir des inductances des phases ou de leurs relations, comprenant

   a) un dispositif de commande (1) délivrant un motif de modulation de largeur d'impulsions nécessaire pour un fonctionnement prédéterminé du moteur à courant continu (3),
   b) un convertisseur (2) pour le moteur à courant continu (3), placé en aval du dispositif de commande,
   c) un dispositif (4) couplé au moteur à courant continu (3) pour déterminer les inductances représentatives de la position erronée du rotor, les signaux basés sur l'inductance $L_U$, $L_V$ et $L_W$ étant générés,
   d) un dispositif de mesure (5) pour soit les courants de phase, soit le courant de circuit intermédiaire,
   e) un dispositif de correction (6) qui détermine des valeurs de correction $K_U$, $K_V$ et Kw dépendantes du courant en tenant compte de valeurs caractéristiques spécifiques au moteur et associe ces valeurs de correction aux signaux basés sur l'inductance résultant de la détermination de position basée sur l'inductance,

   les valeurs caractéristiques spécifiques au moteur étant déterminées à partir des impacts sur les inductances du moteur à courant continu (3) de manière spécifique au moteur comme fonction du rapport entre la valeur angulaire et soit les courants de phase, soit le courant de circuit intermédiaire, pour le dispositif de correction (6)

   - expérimentalement sans connaissance de la construction du moteur à courant continu (3),
   - analytiquement/par simulation par analyse de la construction du moteur ou
   - automatiquement au démarrage du moteur et

   des signaux basés sur l'inductance corrigés

$$L_{U\,korr} = L_U - F_U \text{ avec } F_U = I_{ZK} - K_U,$$

$$L_{V\,korr} = L_V - F_V \text{ avec } F_V = I_{ZK} - K_V,$$

   et

$$L_{W\,korr} = L_W - F_W \text{ avec } F_W = I_{ZK} - K_W$$

   étant déterminés après subdivision de la période électrique du moteur à courant continu (3) en six segments et affectation de différentes valeurs pour $K_U$, $K_V$ et Kw puis enregistrement dans un tableau, de sorte que la position de rotor $\Phi_{korr}$ déterminée et corrigée en utilisant les inductances du moteur à courant continu (3) mesurées et représentatives de la position erronée du rotor est déterminée et des états de commutation soumis à la valeur de correction par le dispositif de commande (1) et donc corrigés sont appliqués au convertisseur (2) pour commander le moteur à courant continu (3).

2. Dispositif selon la revendication 1, **caractérisé en ce que** le dispositif de correction (6) est en outre couplé à un dispositif (7) de détermination de la fonction de correction, le dispositif (7) modifiant automatiquement la tension de moteur et donc le courant de moteur, et que le dispositif (7) est relié au dispositif de correction (6), de sorte que la fonction de correction peut être déterminée à partir du signal de position basé sur l'inductance et des courants de moteur.

3. Dispositif selon la revendication 2, **caractérisé en ce que** le dispositif de commande (1) est relié via le dispositif de mesure (5) et le dispositif de correction (6) au dispositif (7) de détermination d'une fonction de correction pour déterminer automatiquement la valeur caractéristique spécifique au moteur au démarrage du moteur, sachant que

   - le moteur à courant continu (3) est alimenté,
   - les signaux basés sur l'induction sont mesurés à au moins deux courants de moteur différents,

- les valeurs angulaires résultantes sont déterminées à partir des inductances et
- la fonction de correction dépendante du courant est déterminée dans le dispositif (7) de détermination de la fonction de correction, de sorte qu'au moins une valeur de correction linéaire est disponible.

4.  Dispositif selon la revendication 2, **caractérisé en ce que** le dispositif de commande (1) est relié via le dispositif de mesure (5) et le dispositif de correction (6) au dispositif (7) de détermination d'une fonction de correction pour déterminer automatiquement la valeur caractéristique spécifique au moteur au démarrage du moteur, les inductances étant mesurées à différents courants et avec un déplacement négligeable du moteur à courant continu (3) et la relation entre la valeur angulaire calculée et les courants étant calculée, de sorte que la valeur de correction est une constante dans le cas le plus simple.

5.  Dispositif selon la revendication 1, **caractérisé en ce que** le dispositif de correction (6) pour les valeurs de correction dépendantes des courants et de la position du rotor sur la base d'au moins une valeur caractéristique spécifique au moteur est couplé à un dispositif de détection (8) sous la forme d'une boucle de régulation, de sorte que la position de rotor $\phi_{korr}$ corrigée des impacts de charge est déterminée à partir des signaux ainsi corrigés $L_{U\ korr}$, $L_{V\ korr}$ et $L_{W\ korr}$.

6.  Dispositif selon la revendication 5, **caractérisé en ce que** le dispositif de correction (6) est en outre couplé à un dispositif (9) de détermination des fonctions de correction, la tension de moteur et donc le courant de moteur étant modifiés, et que le dispositif (9) est relié au dispositif de correction (6), de sorte que les  fonctions de correction peuvent être déterminées à partir des signaux de position basé sur l'inductance et des courants de moteur.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4090927 B4

- US 20070085508 A1